# EUROPEAN PATENT SPECIFICATION

(11) **EP 3 464 178 B1**
(45) Date of publication and mention of the grant of the patent: **23.12.2020**
(21) Application number: 17725627.8
(22) Date of filing: 29.05.2017
(51) Int. Cl.: C01B 33/037, C25F 3/12, H01M 4/38, C01B 33/021

(54) **PREPARATION OF POROUS SILICON (99.99AT%) BY ELECTRO-OXYDATION OF METALLURGICAL GRADE SILICON**
HERSTELLUNG VON PORÖSEM SILICIUM (99,99 AT%) DURCH ELEKTRO-OXIDIERUNG VON METALLURGISCHEM SILICIUM
PRÉPARATION DE SILICIUM POREUX (99,99 AT%) PAR ÉLECTRO-OXYDATION DE SILICIUM DE QUALITÉ MÉTALLURGIQUE

(30) Priority: 27.05.2016 EP 16305617
(43) Date of publication of application: 10.04.2019
(73) Proprietor: Université de Rennes I, 35000 Rennes Cedex (FR); CENTRE NATIONAL DE LA RECHERCHE SCIENTIFIQUE (C.N.R.S.), 75016 Paris (FR)
(72) Inventor: JOUIKOV, Viatcheslav, 35700 Rennes (FR); ZIZUMBO-LOPEZ, Arturo, MOROLEON GTO.C.P 38800 (MX)
(74) Representative: Regimbeau
(86) International application number: PCT/EP2017/062915
(87) International publication number: WO 2017/203063

(56) References cited:
- WO-A1-2011/053736
- M. M. RIEGER; J. C. FLAKE; P. A. KOHL: "Alternatives to Hydrogen Fluoride for Photoelectrochemical Etching of Silicon", J. ELECTROCHEM. SOC., vol. 146, no. 12, 1999, pages 4485-4489, XP002762238, cited in the application
- PROPST E K ET AL: "THE ELECTROCHEMICAL OXIDATION OF SILICON AND FORMATION OF POROUS SILICON IN ACETONITRILE", JOURNAL OF THE ELECTROCHEMICAL SOCIETY, ELECTROCHEMICAL SOCIETY, INC, US, vol. 141, no. 4, 1 April 1994 (1994-04-01) , pages 1006-1013, XP001042093, ISSN: 0013-4651
- B. SUTHAR ET AL.: POLYHEDRON, vol. 31, 2012, pages 754-758, XP002762239, cited in the application

## Description

### FIELD OF THE INVENTION

The present invention relates to a process of preparation of porous silicon by electrolytic oxidation of metallurgical grade silicon in an electrochemical cell providing efficient mass transfer by forced convection and using pyridinium-like salts as supporting electrolyte in an organic solvent.

### BACKGROUND OF THE INVENTION

During recent years, semiconducting silicon crystals have proved to be the most useful material to build photocells for electricity generation, despite very restrictive requirements in terms of purity of the silicon precursors and high-temperature fabrication. Porous silicon, which is a nanostructured material with outstanding optical and semiconducting properties, is very attractive for solar cell applications, given its band gap broadening, wide absorption spectrum and good antireflection properties for optical coatings. Due to its luminescence properties, it has been considered as a suitable candidate for light emitting devices, as well as for sensing ones. It can also be used for photoelectrochemical splitting of water in order to convert solar energy into electrochemical energy while producing hydrogen, and has other numerous application areas including biosensors, photosensitizers, batteries *[*WO 2011/053736*]*, and tissue engineering.

Porous silicon is usually obtained by electrochemical anodization. This method consists in anodic dissolution of highly purified doped silicon wafers in aqueous or alcoholic media and involves the use of hydrofluoric acid as an etching agent. Besides native oxides normally present on the silicon surface under ambient atmospheric conditions, a thin silicon oxide film formation occurs at low pH in aqueous or water-containing electrolytes, resulting in anode passivation. This oxide film can only be dissolved in the presence of HF, which explains the compulsory use of fluoride-containing etchant, in spite of its toxicity and the highly hazardous nature of this reagent.

The preparation of porous silicon in organic media represents an interesting alternative. Kolls and coworkers first investigated photoelectrochemical etching of n-doped and p-doped silicon in acetonitrile solutions containing HF or tetrabutylammonium salts whose counter-ion acts as a source of F⁻, namely BF₄⁻, PF₆⁻, CF₃SO₃⁻, AsF₆⁻ or SbF₆⁻. Although the dissolution mechanism appeared to be quite complex, a selective etching of silicon layers was demonstrated to be possible using oxygen-free organic solvents. Moreover, electrode passivation of the pore walls could be reduced, and etching morphology could be controlled, depending on the electrolyte used. [Eric K. Propst and Paul A. Kohl. The Electrochemical Oxidation of Silicon and Formation of Porous Silicon in Acetonitrile, J. Electrochem. Soc., Vol. 141, No. 4, April 1994 ; M. M. Rieger, J. C. Flake, and P. A. Kohl. Alternatives to Hydrogen Fluoride for Photoelectrochemical Etching of Silicon. J. Electrochem. Soc. 1999 146(12): 4485-4489]

The U.S. patent by Farrell et al. *[Porous silicon particles, United States Patent,* 7,560,085, July 14, 2009] describes the preparation of porous silicon particles made of a solid core surrounded with a porous silicon layer having a thickness greater than 0.5 microns, by using a stain etching solution of HF, HNO₃ and H₂O. The starting material is a metallurgical silicon powder having an initial particle size greater than 1 micron, composed of about 98.6 to about 99.0 weight percent of Si.

Worth noting is the fact that the well-known preparation methods of porous silicon imply the use of a fluoride containing etchant and a silicon starting material of high purity.

The subject-matter of the present invention is to provide a process for the production of at least 99.99 At% pure porous silicon by anodic dissolution of industrial silicon alloys of much poorer silicon starting content, any mechanical form of metallurgical silicon being suitable to the flow-through cell, or to any other electrochemical cell providing comparable forced convection conditions. The method relies on a new etching electrolyte system that includes tertiary ammonium salts (both fluorine-containing and fluorine-free) dissolved in an organic solvent, thus avoiding the anode passivation by silicon oxide and favoring the formation and propagation of pores, while promoting the dissolution of the silicon-containing etching products formed during the anodization.

The starting metallurgical silicon pieces are enriched by eliminating impurities such as Al (originally 14 At%) and Fe (4.26 At%), reducing their content down to 0.01 At%, as attested by EDS analysis. Their treatment by anodic dissolution leads to enriched porous silicon, the said pores having a diameter less than or equal to 1000 nm and a depth greater than 1 micrometer in a well-defined orientation. The morphology and mechanical form (wafers, plates, bars or lumps) of the enriched porous silicon resulting from the process make it adapted to any industrial application, including water splitting, catalysis, sensors and biosensors, photosensitizers, fuel cells, batteries, tissue engineering. Thus, the process of the present invention allows the formation of high-purity porous silicon with size controlled and deeper pores. It is carried out from commercially available materials in easily controlled conditions that make it suitable for scaling-up. This process is secure, fast, simple and inexpensive.

### SUMMARY OF THE INVENTION

The first subject-matter of the present invention is thus an electrochemical etching process for the enrichment and preparation of porous silicon by anodic etching of any starting metallurgical grade silicon pieces with a minimum 67.7 At% Si content in anhydrous aprotic organic solvent containing a dissolved supporting electrolyte, namely a tertiary ammonium salt resulting from the corresponding amine and a mineral acid.

Within the meaning of this invention, "metallurgical grade silicon" is intended to designate any compound having a Si content strictly superior to 50 At% that is obtained from a naturally occurring mineral containing silicon via an industrial process.

Under "tertiary ammonium", it is understood a protonated amine, in which when compared to the ammonium cation NH₄⁺, three hydrogen atoms have been replaced by organic groups.

A second subject-matter of the invention is a process comprising a step of using the electrolytic solution resulting from the electrochemical etching according to the invention for further complexation reactions involving a nitrogen aromatic or conjugated compound.

### BRIEF DESCRIPTION OF THE DRAWINGS

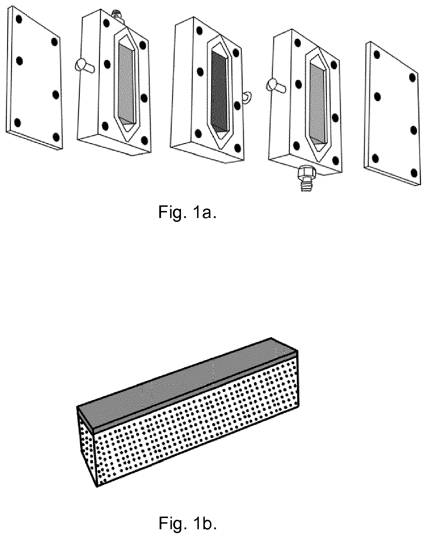

Figure 1a. Multicompartment flow-through electrolytic cell
   Figure 1a provides a complete sketch of the multicompartment (one anode, two cathodes) flow-through electrolytic cell that can be used in the present invention to produce porous silicon for any following practical application.
Figure 1b. Cartridge for lumps or particles
   Figure 1b shows a perforated cartridge that can be filled with the starting silicon lumps or particles.
Figure 2. Alternative electrochemical cell

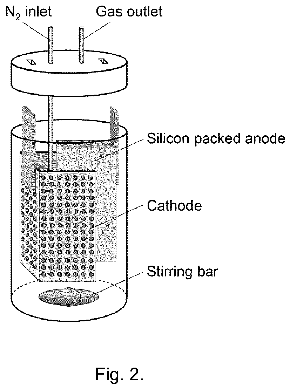

   Figure 2 illustrates another electrochemical cell that provides a mass transfer by forced convection efficient enough to be used in the present invention.

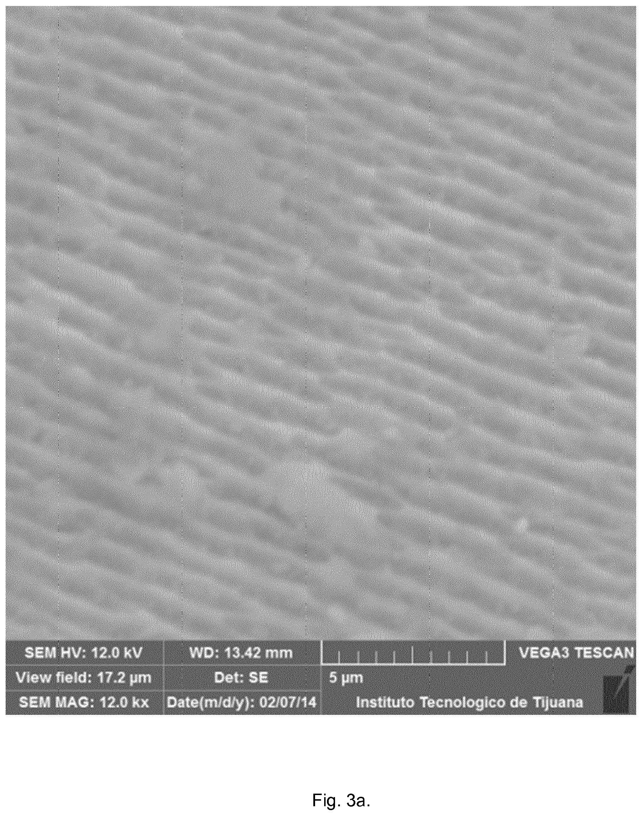

Figure 3a-b. SEM images of porous silicon.
   Figures 3a-b are scanning electron microscopy (SEM) images of the porous silicon obtained by the process of the invention, characterizing its morphology.

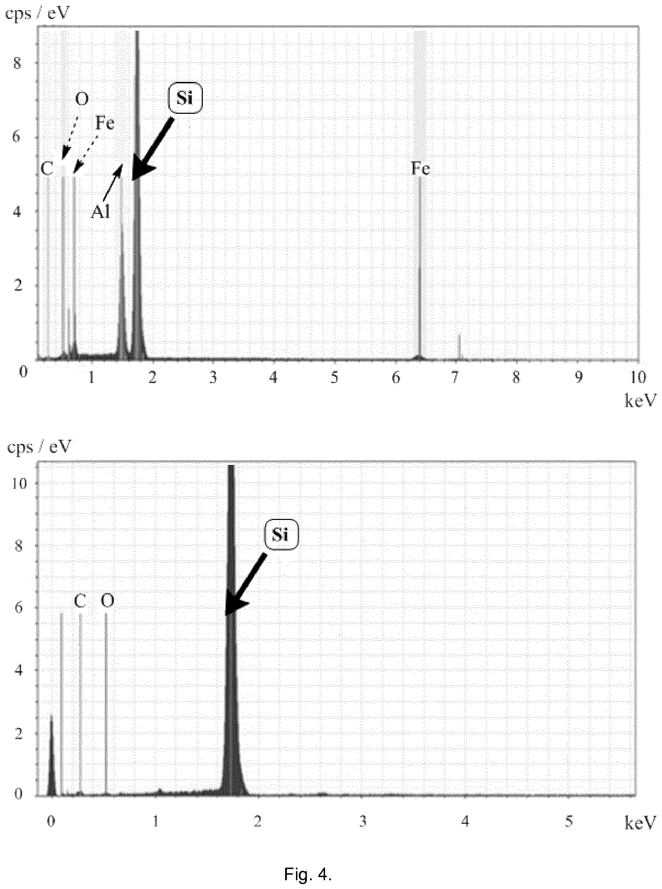

Figure 4. Composition of the silicon sample (A) before and (B) after the anodic etching by Energy Dispersive X-Ray Analysis (EDX).
   Figure 4 displays the energy dispersive X-ray analysis (EDX) of a silicon sample (A) before and (B) after the anodic etching. The comparison of their compositions establishes the purity improvement.

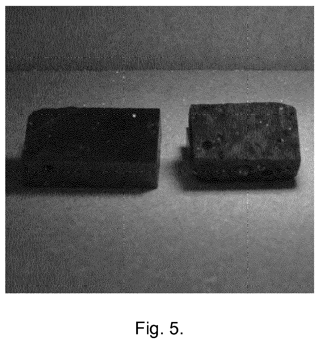

Figure 5. Blue fluorescence of the anodically prepared porous silicon (right). Left: non-treated silicon before the anodic treatment.
   Figure 5 illustrates that the porous silicon obtained by the process according to the invention exhibits the expected luminescent property for such a material luminescent property. The anodically prepared porous silicon (right) shows blue fluorescence whereas the silicon before the anodic treatment (left) doesn't.

### DETAILLED DESCRIPTION AND ADDITIONAL EMBODIMENTS

The present invention concerns the preparation of porous silicon by anodic dissolution of metallurgical grade silicon pieces.

Preferably, said starting metallurgical grade silicon is in the form of wafers, plates, bars, or small lumps, and leads to the corresponding forms of porous silicon.

The porous silicon is prepared by electrochemical etching of any metallurgical grade silicon with a minimum 67.7 At% Si content in an anhydrous aprotic organic solvent containing a dissolved supporting electrolyte, namely a tertiary ammonium salt resulting from the corresponding amine and a mineral acid.

In a particular embodiment of the present invention, the metallurgical grade silicon is an undoped, n-doped or p-doped silicon wafer.

Advantageously, the positively charged nitrogen atom of the tertiary ammonium ion is linked to a hydrogen atom, a carbon atom via a single bond, and another carbon atom via a double bond.

In a preferred embodiment of the invention, the tertiary ammonium ion is aromatic.

The mineral acid may be selected from the group consisting of nitric, phosphoric, sulfuric, and HX-type acids.

In another particular embodiment of the invention, the mineral acid is a mineral HX-type acid.

By "mineral HX-type acid", it is understood a mineral acid containing at least one halogen atom.

The term "halogen" as used in the present invention refers to an atom of fluorine (F), chlorine (CI), bromine (Br) or iodine (I), preferably F or CI.

When used in the present application, the widespread notation "X" intends to refer to a halogen atom, as well-understood by the one skilled in the art.

The term "mineral HX-type acid" hence includes, but is not limited to, HF, HCl, HBr, HI, HBF₄, HPF₆, HAsF₆, HSbF₆, HFSO₃·SbF₅, HSO₃CF₃, HFSO₃, HClO₄ and HB(CN)(CF₃)₃.

In still another particular embodiment of the invention, the amine is selected from the group consisting of an imidazoline, a pyrazoline such as 1-pyrazoline, a triazoline, a dihydropyridine, a tetrahydropyridine, a dihydropyrimidine, a tetrahydropyrimidine, a dihydropyridazine, a tetrahydropyridazine, a dihydropyrazine, a tetrahydropyrazine, a dihydrotriazine, an indoline, a benzimidazoline, a pyrrole, an imidazole, a pyrazole, a triazole, a pyridine, a bipyridine, a terpyridine, a pyrimidine, a pyridazine, a pyrazine, a triazine (such as 1, 3, 5-triazine), an indole, a benzimidazole, an indazole, a purine, a quinoline, an isoquinoline, a cinnoline, a quinazoline and a quinoxaline.

Advantageously, the amine is aromatic, and is thus selected from the group consisting of a pyrrole, an imidazole, a pyrazole, a triazole, a pyridine, a bipyridine, a terpyridine, a pyrimidine, a pyridazine, a pyrazine, a triazine (such as 1, 3, 5-triazine), an indole, a benzimidazole, an indazole, a purine, a quinoline, an isoquinoline, a cinnoline, a quinazoline and a quinoxaline.

In yet another particular embodiment, the amine is selected from the group consisting of pyridine, bipyridine, terpyridine, piperidine, pyrazoline such as 1-pyrazoline and imidazole, preferably from the group consisting of pyridine, bipyridine, terpyridine, 1-pyrazoline and imidazole, more preferably from the group consisting of pyridine, bipyridine, terpyridine and imidazole.

Most preferably, the tertiary ammonium salt is a pyridinium salt.

In another preferred embodiment of the invention, the ammonium counterion X⁻ is selected from the group consisting of F⁻, Cl⁻, Br⁻, I⁻, BF₄⁻, PF₆⁻, AsF₆⁻, SbF₆⁻, FSO₃·SbF₅⁻, SO₃CF₃⁻, FSO₃⁻, ClO₄⁻, B(CN)(CF₃)₃⁻, preferably from the group consisting of F⁻, Cl⁻, BF₄⁻, PF₆⁻, AsF₆⁻ and SbF₆⁻, more preferably from the group consisting of Cl⁻, BF₄⁻, PF₆⁻, AsF₆⁻ and SbF₆⁻.

The process for preparation and enrichment of porous silicon consists in electro-oxidation of the metallurgical silicon anode using a cathode that allows the reduction of the supporting electrolyte.

The obtained material has regular pores having a diameter less than or equal to 1000 nm and an in-depth propagation of more than 1 micrometer, which corresponds to the depth sensitivity of SEM.

The porous silicon resulting from the process according to the present invention can be used in a broad field of applications.

The metallurgical silicon anode can be pre-formed (Figure 1a) or loaded to the electrolytic cell in form of a granular material using a perforated or porous cartridge (Figure 1b).

The desired starting silicon form can be obtained by cutting or milling from a lump or be prepared by melting in an induction furnace oven.

Preferably, the process is carried out starting form metallurgical grade silicon pieces sized from 1 micron to 10 cm, preferably 0.1 cm to 5 cm, more preferably 0.2 cm to 2 cm.

For the purpose of the present invention, no further refinement of the starting wafers, plates, bars or lumps of metallurgical grade silicon is required. Such alloys may contain Si, Al, Fe, Cu and traces of other impurities. Any metallurgical grade silicon known with at least 67.7 At% Si content may be employed in the process. Typical metallurgical grade silicon powders suitable for the present invention have the following composition: Si (67.7 At%), Al (14.1 At%), Fe (4.3 At%), O (3.5 At%), and C (10.4 At%).

The solution medium for the process is an aprotic anhydrous organic solvent with high dielectric permittivity preferably selected in the group consisting of acetonitrile, dimethylformamide (DMF), tetrahydrofuran (THF), 1,2-dimethoxyethane (DME), hexamethylphosphoramide (HMPA) or a mixture of any of them.

The process requires an anhydrous solvent with a rigorous absence of oxygen and moisture. In one embodiment, dry nitrogen is bubbled through the solvent for at least 5 minutes prior to the electro-oxidation step.

To ensure the appropriate conductivity of the media and an efficient removal of anodically formed electrophilic silicon species from the etching zone, supporting electrolytes should be soluble in the organic solvent and belong for instance to the family of PyHF, PyHCl, PyHBF₄, any other pyridinium salts with counter-ions such as F⁻, Cl⁻, BF₄⁻, PF₆⁻, AsF₆⁻ and SbF₆⁻ being suitable. Beside these, other salts may be used, for instance those derived from other N- bases forming tertiary ammonium salts with HX-type acids, such as bipyridine, terpyridine, 1- pyrazoline and imidazole.

The salt molar concentration preferably ranges from about 0.1 M to 2 M in CH₃CN.

In one embodiment, the electrolytes are dried at 80 °C in a vacuum for at least two hours.

The cathodes used in the process can be made of platinum, gold, stainless steel, graphite, glassy carbon, or any other cathodically stable conductor allowing the reduction of pyridinium or other tertiary ammonium salts. Prior to the electrolysis, the electrodes are preferably cleaned with sand paper and rinsed in an ultrasonic bath successively with water, ethanol and acetonitrile.

The electro-oxidation process can be carried out in a Teflon multicompartment cell (Figure 1a) with parallel electrodes of at least three plates or more; the whole assembly is tightened together with stainless steel screws. In order to obtain a homogenous surface of the treated silicon, the cell should contain a number (n) of anodes for (n+1) cathodes.

The contact with the silicon plate or bar is made with a stainless-steel screw, the round head being recovered with Teflon tape, and the naked tip making the contact with the anode to pass the current at the applied potential.

In order to obtain a flow-through regime, the cell can be connected to an external solution reservoir and a diaphragm pump via appropriate tubing in order to provide a constant flux of solution, an efficient mass transfer by forced convection in the cell and to discharge the solution to the same reservoir. The diaphragm pump should be resistant to organic medium.

Preferably, in the reservoir with a one-way outlet for vent, a proper volume of organic solution is added and a flux of nitrogen is bubbled to the solvent for at least 5 min, to eliminate any traces of oxygen.

Typically, once the cell is fed with constant flux of electrolytic solution, the current contact screws should be connected with copper cables to the DC voltage supply, the positive pole (red) should be connected in parallel to the silicon anodes and the negative pole (black) should be connected in parallel to the cathodes. Then, a DC voltage in the range from 4 to 10 V should be applied to the cell and the current should be monitored. At the beginning, the current is low, until the auto-activation of the surface takes place, after which the current increases. The size and depth (thickness of the porous layer) of the final material pores may be controlled by adjusting the current density, the reaction time, the solution flux, and the electrolyte concentration. The electro-oxidation will be carried out at room temperature.

In another embodiment of the invention, the electro-oxidation process can be carried out in any other electrochemical cell providing efficient mass transfer by forced convection, such as the one illustrated in Figure 2.

By "electrochemical cell providing efficient mass transfer by forced convection", it is understood an electrolytical cell that enables efficient circulation of the electrolyte either in a flow-through mode or by means of any other stirring, e.g. using a mechanical or magnetic stirrer, ultrasonic stirring or gas bubbling [Electrochemical Methods. Fundamentals and Applications, 2nd Ed., Allen J. Bard Larry R. Faulkner, John Wiley & Sons, Inc., 2001, notably pages 28, 331 *and following*.]

When the electrolysis is over, the cell should be emptied of the electrolytic etching solution. A further sonication step can be added with the purpose of cleansing the obtained porous silicon in which the silicon electrodes should be rinsed in acetonitrile in an ultrasonic bath. The thus obtained silicon is then dried up for characterization and stored for transformation by cutting or milling, or for direct use, depending on further applications.

For some applications, it may be relevant to change the chemical surface of the dried porous silicon. This can be accomplished in a natural way when the native oxide forms upon aging in the air, or by treatment of the silicon surface with water or air atmosphere, or at temperatures higher that 300 °C to produce oxygen bonding to the outer surface.

The resulting surface can be further chemically functionalized with different groups such as hydrogen, oxygen, halogen, alkenyl, alkyl, amine, alkoxy, ester, ether, aldehyde, ketone, carboxylate, thiol, aryl, covalently attached redox-, spin-, chromophore-markers or units with molecular recognition properties and combinations of thereof.

The second subject-matter of the invention is a process comprising the use of the silicon electrolytic solution resulting from the anodization of metallurgical silicon as a reactive material. Indeed, this solution contains well-known stable pyridine-silicon-like complexes, *[*B. Suthar et al., Polyhedron 31 (2012) 754-758*]* whose formation is actually the driving-force that enables an efficient anodic dissolution.

The electrolytic solution should first be filtered, and the purified pyridine-silicon complexes should then be mixed successively with any nitrogen aromatic or conjugated compound acting as complexing agents, such as bipyridine, terpyridine, porphyrins, SCN, CN, or their derivatives. The ensuing ligand exchange reaction provides other silicon-nitrogen complexes that exhibit metal to ligand charge transfer bands (MLCT) and can be used as anticancer-agents, dye sensitizers for solar cells, for water splitting, DNA cleavage, photocatalytic CO₂ reduction, oxygen sensing, etc.

### EXAMPLES

### Example 1: Preparation of porous silicon using PyHBF₄ as an etchant

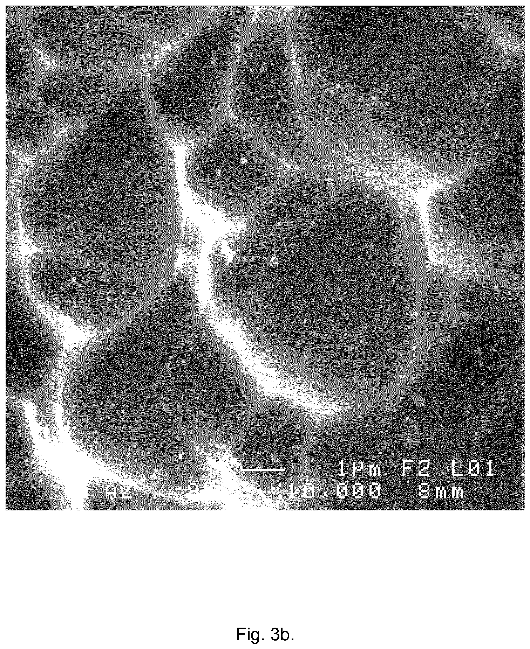

Silicon plates were prepared by cutting a proper slice from metallurgical grade silicon lumps from imported metal "Metales Aguila, S.A. de C.V", Mexico or from Dankov Chemical Comb., Russia (GOST 2169-69, KR00, KR1, KR2, KR3). The metallurgical grade silicon pieces were anodically etched using approximately 100 ml of a 1 M PyHBF₄ solution in dry acetonitrile (HPLC grade CH₃CN). Dry N₂ was bubbled to the solution to purge the O₂ present in the solvent. The solution was fed to a Teflon three-compartment cell and returned to the same compartment by a resistant to solvent diaphragm pump. A nominal DC voltage of 4-10 V was applied to the electrodes (one anode and two parallel connected cathodes). The process was stopped when the current had decreased to 50% of the initial current. Once the electrochemical etching was finished, the cell was opened and the porous silicon pieces were extracted. Porous silicon was then sonicated in CH₃CN for 5 min to give the 99.99 At% pure porous silicon. Thus obtained enriched porous silicon was sliced and its morphology was characterized by SEM (Figure 3) while the elemental composition was established by mapping EDX analysis (Figure 4). Blue photoluminescence of this sample was observed upon its illumination with a 350 nm UV lamp (Figure 5).

Figure 3a shows the SEM microscopy of the surface prepared by the method described above; a regular pattern with an average step of ca. 500 nm can be observed. In Figure 3b, the in-depth directed pores of 50-100 nm in diameter can be seen. Figure 4 compares the EDX analysis of the initial metallurgical grade silicon to the one of the porous silicon obtained by the process of the present invention. It demonstrates the enrichment of the silicon due to the elimination of metal impurities, reducing the Al and Fe content to less than 0.01 At% (i.e. the sensitivity limit of the method at 1 micrometer depth of the analyzed sample), while carbon and oxygen are maintained. The process leads to porous silicon enriched in silicon up to 99.99 At% with an average pore diameter of less or equal to 100 nm, the pores in-depth orientation being well-defined.

### Example 2: Preparation of porous silicon using PyHCl as an etchant

Silicon plates were prepared by cutting a proper sheet from metallurgical grade silicon lumps from imported metal "Metales Aguila, S.A. de C.V", Mexico. The metallurgical grade silicon plates were anodically etched using approximately 100 ml of a 1 M solution of PyHCl in dry acetonitrile (HPLC grade CH₃CN), and dry N₂ was bubbled through the solution in order to purge O₂ present in the solvent. Solution was fed to Teflon three-compartment cell and returned to the same compartment by a resistant to solvent diaphragm pump. A nominal DC voltage of 4-10 V was applied to the electrodes between one anode and two parallel connected cathodes. The electrolysis was stopped when the current had decreased to 50% of the initial one. After that, the cell was opened and the porous silicon was extracted and sonicated for 5 minutes in CH₃CN, providing the 99.99 At% pure porous silicon. Blue photoluminescence was observed upon its illumination with a 350 nm UV lamp. The morphology and elemental composition of thus treated electrode were determined on a laterally cut slice by SEM and by EDX mapping analysis.

### Example 3: Preparation of porous silicon using imidazolium tetrafluoroborate as an etchant

Silicon plates were prepared by cutting a proper slice from metallurgical grade ferro-silicon alloy lumps from Dankov Chemical Comb., Russia (GOST 2169-69, KR2). These starting metallurgical grade silicon pieces were anodically etched using approximately 100 ml of a 1 M imidazolium tetrafluoroborate ([Imi]BF₄) solution in dry acetonitrile (HPLC grade CH₃CN). Dry N₂ was bubbled through the solution to purge the O₂ present in the solvent. A nominal DC voltage of 4-10 V was applied to the electrodes. Throughout the electrolysis, the solution was intensively stirred with a magnetic stirring bar. The electrolysis was stopped when the current had decreased to 50% of the initial one. After that, the cell was opened and the porous silicon was extracted and sonicated for 5 minutes in CH₃CN, providing the 99.99 At% pure porous silicon. Blue photoluminescence was observed upon its illumination with a 350 nm UV lamp. The morphology and elemental composition of thus treated electrode were determined by SEM and by EDX mapping analysis.

### Example 4: Preparation of porous silicon from silicon wafer using PyHBF₄ as an etchant

A plate of electronic grade n-doped silicon wafer from Czochralski process (9N, 99.9999999 At%) was anodically etched using approximately 50 ml of a 0.2 M PyHBF₄ solution in dry acetonitrile (HPLC grade CH₃CN). The etching was carried out under inert atmosphere (argon) to eliminate oxygen in the solution.

A nominal DC voltage of 11-13 V was applied to the electrodes (with the distance anode-cathode of 0.5 cm) providing the current density of ca. 50 mA/cm². Throughout the electrolysis, the solution was intensively stirred with a magnetic stirring bar. After approximately 3 hours, the current decreased to 50% of the initial value and the electrolysis was stopped. The silicon sample was then extracted from the etching cell and sonicated for 5 minutes in CH₃CN. Resulted from this etching, the formation of a uniform surface porous layer with the thickness of 70-100 mm was revealed by SEM imaging, the pores oriented perpendicularly to the surface with the average pore diameter of 330 nm. The EDS analysis did not reveal any contamination of the porous silicon that might have arisen from the process. The surface of the etched sample exhibited a blue luminescence under the illumination with a 350 nm UV lamp.

## Claims

1. An electrochemical etching process for the enrichment and preparation of porous silicon by anodic etching of any starting metallurgical grade silicon pieces with a minimum 67.7 At% Si content in an anhydrous aprotic organic solvent containing a dissolved tertiary ammonium salt resulting from the corresponding amine and a mineral acid as supporting electrolyte.

2. A process according to claim 1, wherein said mineral acid is a mineral HX-type acid.

3. A process according to claim 1 or 2 for the preparation of at least 99.99 At% pure porous silicon pieces.

4. A process according to any one of claims 1 to 3, wherein the starting metallurgical grade silicon pieces are undoped, n-doped or p-doped silicon wafers.

5. A process according to any one of claims 1 to 4, wherein the salt derives from a pyrrole, an imidazole, a pyrazole, a triazole, a pyridine, a bipyridine, a terpyridine, a pyrimidine, a pyridazine, a pyrazine, a triazine (such as 1, 3, 5-triazine), an indole, a benzimidazole, an indazole, a purine, a quinoline, an isoquinoline, a cinnoline, a quinazoline or a quinoxaline, preferably from pyridine, bipyridine, terpyridine or imidazole.

6. A process according to claim 5, wherein the tertiary ammonium salt is a pyridinium salt.

7. A process according to any one of claims 1 to 6, wherein the tertiary ammonium salt contains Cl⁻, BF₄⁻, PF₆⁻, AsF₆⁻ or SbF₆⁻ as a counterion.

8. A process according to any one of claims 1 to 7, wherein the aprotic anhydrous organic solvent is acetonitrile, dimethylformamide (DMF), tetrahydrofuran (THF), 1,2-dimethoxyethane (DME), hexamethylphosphoramide (HMPA) or a mixture of any of them.

9. A process according to any one of claims 1 to 8, wherein said starting metallurgical grade silicon pieces are filled in any perforated or porous cartridge which is used as an anode.

10. A process according to any one of claims 1 to 9, wherein the electrochemical etching is carried out in a flow-through electrochemical cell with multiple compartments or any other electrochemical cell providing an efficient forced convection.

11. A process according to any one of claims 1 to 10, comprising a further purification step of the obtained porous silicon pieces by sonication in a pure solvent.

12. A process according to any one of claims 1 to 11, wherein the obtained porous silicon pieces are further transformed by cutting or milling.

13. A process according to any one of claims 1 to 12, comprising a further step of chemical functionalization of the silicon surface.

14. A process comprising the step of using the electrolytic solution resulting from the electrochemical etching according to any one of claims 1 to 12 for further complexation reactions involving a nitrogen aromatic or conjugated compound.

15. A process according to claim 14, wherein the nitrogen aromatic or conjugated compound is pyridine, bipyridine, terpyridine, porphyrin, SCN or CN or any of their derivatives.

## Patentansprüche

1. Elektrochemisches Ätzverfahren zur Anreicherung und Herstellung von porösem Silizium durch anodisches Ätzen beliebiger metallurgischer Ausgangssiliziumteile mit einem Si-Gehalt von mindestens 67,7 At.-% in einem wasserfreien aprotischen organischen Lösungsmittel, das ein gelöstes tertiäres Ammoniumsalz enthält, das aus dem entsprechenden Amin und einer Mineralsäure als unterstützender Elektrolyt resultiert.

2. Verfahren nach Anspruch 1, wobei die Mineralsäure eine Mineralsäure vom HX-Typ ist.

3. Verfahren nach Anspruch 1 oder 2 zur Herstellung von porösen Siliziumteilen mit einer Reinheit von mindestens 99,99 At.-%.

4. Verfahren nach einem der Ansprüche 1 bis 3, wobei die metallurgischen Ausgangssiliziumteile undotierte, n-dotierte oder p-dotierte Silizium-Wafer sind.

5. Verfahren nach einem der Ansprüche 1 bis 4, wobei das Salz ein Derivat von einem Pyrrol, einem Imidazol, einem Pyrazol, einem Triazol, einem Pyridin, einem Bipyridin, einem Terpyridin, einem Pyrimidin, einem Pyridazin, einem Pyrazin, einem Triazin (wie beispielsweise 1,3,5-Triazin), einem Indol, einem Benzimidazol, einem Indazol, einem Purin, einem Chinolin, einem Isochinolin, einem Cinnolin, einem Chinazolin oder einem Chinoxalin, vorzugsweise von Pyridin, Bipyridin, Terpyridin oder Imidazol, ist.

6. Verfahren nach Anspruch 5, wobei das tertiäre Ammoniumsalz ein Pyridiniumsalz ist.

7. Verfahren nach einem der Ansprüche 1 bis 6, wobei das tertiäre Ammoniumsalz Cl⁻, BF₄⁻, PF₆⁻, AsF₆⁻ oder SbF₆⁻ als ein Gegenion enthält.

8. Verfahren nach einem der Ansprüche 1 bis 7, wobei das aprotische wasserfreie Lösungsmittel Acetonitril, Dimethylformamid (DMF), Tetrahydrofuran (THF), 1,2-Dimethoxyethan (DME), Hexamethylphosphoramid (HMPA) oder eine Mischung einem beliebigen davon ist.

9. Verfahren nach einem der Ansprüche 1 bis 8, wobei die metallurgischen Ausgangssiliziumteile in eine beliebige perforierte oder poröse Kassette gefüllt werden, die als eine Anode verwendet wird.

10. Verfahren nach einem der Ansprüche 1 bis 9, wobei das elektrochemische Ätzen in einer elektrochemischen Durchflusszelle mit mehreren Abteilen oder einer beliebigen anderen elektrochemischen Zelle durchgeführt wird, die eine wirksame erzwungene Konvektion bereitstellt.

11. Verfahren nach einem der Ansprüche 1 bis 10, das ferner einen Schritt zur Reinigung der erhaltenen porösen Siliziumteile durch Beschallung in einem reinen Lösungsmittel umfasst.

12. Verfahren nach einem der Ansprüche 1 bis 11, wobei die erhaltenen porösen Siliziumteile durch Schneiden oder Fräsen ferner umgestaltet werden.

13. Verfahren nach einem der Ansprüche 1 bis 12, das einen weiteren Schritt zur chemischen Funktionalisierung der Siliziumoberfläche umfasst.

14. Verfahren, das den Schritt des Verwendens der elektrolytischen Lösung, die aus dem elektrochemischen Ätzen nach einem der Ansprüche 1 bis 12 resultiert, für weitere Komplexbildungsreaktionen umfasst, die eine aromatische oder konjugierte Stickstoffverbindung einbeziehen.

15. Verfahren nach Anspruch 14, wobei die aromatische oder konjugierte Stickstoffverbindung Pyridin, Bipyridin, Terpyridin, Porphyrin, SCN oder CN oder ein beliebiges ihrer Derivate ist.

## Revendications

1. Procédé de gravure électrochimique pour l'enrichissement et la préparation de silicium poreux par gravure anodique de n'importe quelles pièces en silicium de qualité métallurgique de départ ayant une teneur minimale en Si de 67,7 % atomiques dans un solvant organique aprotique anhydre contenant un sel d'ammonium tertiaire dissous résultant de l'amine correspondante et d'un acide minéral en tant qu'électrolyte de support.

2. Procédé selon la revendication 1, dans lequel ledit acide minéral est un acide minéral de type HX.

3. Procédé selon la revendication 1 ou 2, pour la préparation de pièces en silicium poreux ayant une pureté de 99,99 % atomiques.

4. Procédé selon l'une quelconque des revendications 1 à 3, dans lequel les pièces en silicium de qualité métallurgique de départ sont des tranches de silicium non dopé, n-dopé ou p-dopé.

5. Procédé selon l'une quelconque des revendications 1 à 4, dans lequel le sel dérive d'un pyrrole, d'un imidazole, d'un pyrazole, d'un triazole, d'une pyridine, d'une bipyridine, d'une terpyridine, d'une pyrimidine, d'une pyridazine, d'une pyrazine, d'une triazine (telle que la 1,3,5-triazine), d'un indole, d'un benzimidazole, d'un indazole, d'une purine, d'une quinoline, d'une isoquinoline, d'une cinnoline, d'une quinazoline ou d'une quinoxaline, de préférence d'une pyridine, d'une bipyridine, d'une terpyridine ou d'un imidazole.

6. Procédé selon la revendication 5, dans lequel le sel d'ammonium tertiaire est un sel de pyridinium.

7. Procédé selon l'une quelconque des revendications 1 à 6, dans lequel le sel d'ammonium tertiaire contient Cl⁻, BF₄⁻, PF₆⁻, AsF₆⁻ ou SbF₆⁻ en tant que contre-ion.

8. Procédé selon l'une quelconque des revendications 1 à 7, dans lequel le solvant organique anhydre aprotique est l'acétonitrile, le diméthylformamide (DMF), le tétrahydrofurane (THF), le 1,2-diméthoxyéthane (DME), l'hexaméthylphosphoramide (HMPA) ou un mélange de n'importe lesquels de ceux-ci.

9. Procédé selon l'une quelconque des revendications 1 à 8, dans lequel lesdites pièces en silicium de qualité métallurgique de départ sont introduites dans une quelconque cartouche perforée ou poreuse qui est utilisée en tant qu'anode.

10. Procédé selon l'une quelconque des revendications 1 à 9, dans lequel la gravure électrochimique est mise en œuvre dans une cellule électrochimique à renouvellement continu ayant de multiples compartiments ou n'importe quelle autre cellule électrochimique fournissant une convexion forcée efficace.

11. Procédé selon l'une quelconque des revendications 1 à 10, comprenant une autre étape de purification des pièces en silicium poreux obtenues par sonication dans un solvant pur.

12. Procédé selon l'une quelconque des revendications 1 à 11, dans lequel les pièces en silicium poreux obtenues sont en outre transformées par découpage ou meulage.

13. Procédé selon l'une quelconque des revendications 1 à 12, comprenant une autre étape de fonctionnalisation chimique de la surface du silicium.

14. Procédé comprenant l'étape d'utilisation de la solution électrolytique résultant de la gravure électrochimique selon l'une quelconque des revendications 1 à 12 pour des réactions de complexation ultérieures impliquant un composé conjugué ou aromatique azoté.

15. Procédé selon la revendication 14, dans lequel le composé conjugué ou aromatique azoté est la pyridine, la bipyridine, la terpyridine, la porphyrine, le SCN ou le CN ou l'un quelconque de leurs dérivés.
